# EUROPÄISCHE PATENTANMELDUNG

(11) **EP 4 303 631 A1**
(43) Veröffentlichungstag der Anmeldung: **10.01.2024**
(21) Anmeldenummer: 23170957.7
(22) Anmeldetag: 02.05.2023
(51) Int. Cl.: G01V 8/20

(54) **ÜBERWACHUNGSEINRICHTUNG**

(30) Priorität: 06.07.2022 DE 202022103777 U
(71) Anmelder: Leuze electronic GmbH + Co. KG, 73277 Owen/Teck (DE)
(72) Erfinder: Feller, Bernhard, 86316 Friedberg (DE); Koperski, Joachim, 85521 Ottobrunn (DE); Jüttner, Andreas, 81543 München (DE); Willuweit, Gerhard, 71032 Böblingen (DE); Keßler, Daniela, 89150 Laichingen (DE); Hörderich, Johann, 82291 Mammendorf (DE); Heckmayr, Alexander, 86807 Buchloe (DE); Rauscher, Thorsten, 81379 München (DE)
(74) Vertreter: Ruckh, Rainer Gerhard

(57) **Zusammenfassung**

Die Erfindung betrifft eine Überwachungseinrichtung (100) mit einem Lichtvorhang (1) zur Erfassung von Objekten in einem Überwachungsbereich. An dem Lichtvorhang (1) ist als Grundgerät wenigstens ein weiterer Lichtvorhang (1a) als Erweiterungsgerät angeschlossen. Die Auswerteergebnisse des Grundgeräts werden an das Erweiterungsgerät übertragen und mit Auswerteergebnissen des Erweiterungsgeräts verknüpft, wodurch in dem Erweiterungsgerät ein Gesamtergebnis erhalten wird. Jeder Lichtvorhang (1, 1a, 1b) weist eine Anschlusseinheit (20, 20') auf über welche eine Datenkommunikation zwischen zwei Lichtvorhängen (1, 1a, 1b) durchführbar ist. Die Datenkommunikation zwischen Lichtvorhängen (1, 1a, 1b) ist fehlersicher. Die Datenkommunikation ist durch Prüfsummen abgesichert.

## Beschreibung

Die Erfindung betrifft eine Überwachungseinrichtung gemäß dem Oberbegriff des Anspruchs 1.

Eine derartige Überwachungseinrichtung weist einen Lichtvorhang auf, der zur Erfassung von Objekten in einem Überwachungsbereich ausgebildet ist.

Der Lichtvorhang umfasst typischerweise eine Sendereinheit und eine Empfängereinheit auf, die an gegenüberliegenden Rändern des Überwachungsbereichs angeordnet sind. Die Sendereinheit weist ein erstes Gehäuse auf, in der eine Reihenanordnung von Lichtstrahlen emittierenden Sendern angeordnet ist. Die Empfängereinheit weist ein zweites Gehäuse auf, in dem eine Reihenanordnung von Lichtstrahlen empfangenden Empfängern vorgesehen ist. Bei freiem Überwachungsbereich treffen die Lichtstrahlen jedes Senders ungehindert auf einen zugeordneten Empfänger. Bei einem Objekteingriff in den Überwachungsbereich werden die Lichtstrahlen zumindest eines Senders unterbrochen.

Der Lichtvorhang weist als Elektronikkomponente eine Auswerteeinheit auf, in welcher in Abhängigkeit von Empfangssignalen der Empfänger ein Objektfeststellungssignal generiert wird. Dieses Objektfeststellungssignal kann insbesondere als binäres Schaltsignal ausgebildet sein, dessen Schaltzustände angeben, ob sich ein Objekt im Überwachungsbereich befindet oder nicht.

Die Lichtstrahlen des Lichtvorhangs definieren ein ebenes Schutzfeld, innerhalb dessen Objekte erfasst werden können. Die Größe des Schutzfelds ist durch die Anzahl der Sender bzw. Empfänger vorgegeben.

Eine applikationsspezifische Anpassung des Lichtvorhangs mit unterschiedlichen Schutzfeldern kann in dessen Fertigungsprozess vorgegeben werden, in dem die Gehäuse entsprechend dimensioniert werden und dann mit entsprechenden Anzahlen von Sendern bestückt werden.

Generell sind auch Mehrfachanordnungen von Lichtvorhängen möglich, um komplexere Überwachungsaufgaben zu erfüllen.

Der Erfindung liegt die Aufgabe zugrunde eine Überwachungseinrichtung der eingangs genannten Art bereitzustellen, die einen flexiblen, an unterschiedliche Einsatzbedingungen anpassbaren Aufbau aufweist.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen vorgesehen.

Die Erfindung betrifft eine Überwachungseinrichtung mit einem Lichtvorhang zur Erfassung von Objekten in einem Überwachungsbereich. An dem Lichtvorhang ist als Grundgerät wenigstens ein weiterer Lichtvorhang als Erweiterungsgerät angeschlossen. Die Auswerteergebnisse des Grundgeräts werden an das Erweiterungsgerät übertragen und mit Auswerteergebnissen des Erweiterungsgeräts verknüpft, wodurch in dem Erweiterungsgerät ein Gesamtergebnis erhalten wird. Jeder Lichtvorhang weist eine Anschlusseinheit auf über welche eine Datenkommunikation zwischen zwei Lichtvorhängen durchführbar ist. Die Datenkommunikation zwischen Lichtvorhängen ist fehlersicher. Die Datenkommunikation ist durch Prüfsummen abgesichert.

Mit dem wenigstens einen Erweiterungsgerät wird die Funktionalität des Lichtvorhangs erweitert, da zwei Lichtvorhänge zu Überwachungsfunktionen zur Verfügung stehen. Mit den beiden Lichtvorhängen wird jeweils ein Überwachungsbereich überwacht, die sich zu einem Gesamtbereich ergänzen, so dass innerhalb eines vergrößerten Bereichs Überwachungsfunktionen durchgeführt werden können.

Die Orientierungen der Lichtvorhänge relativ zueinander können variiert werden und so an unterschiedliche Applikationsanforderungen angepasst werden.

Ein weiterer wesentlicher Vorteil der Erfindung besteht darin, dass zur Ausbildung der Überwachungseinrichtung der das Erweiterungsgerät bildenden Lichtvorhang an den das Grundgerät bildenden Lichtvorhang angeschlossen werden kann, so dass keinerlei Eingriffe in diese Lichtvorhänge notwendig sind, um diese zu verbinden.

Ein wesentlicher Aspekt der Erfindung besteht darin, dass in den einzelnen Lichtvorhängen ermittelte Auswerteergebnisse im Erweiterungsgerät zu einem Gesamtergebnis verknüpft werden. Die erfindungsgemäße Überwachungseinrichtung weist somit eine effiziente arbeitsteilige Struktur auf. Mit den einzelnen Lichtvorhängen werden nicht nur unterschiedliche räumliche Bereiche überwacht. Vielmehr können für die Lichtvorhänge unterschiedliche Überwachungsmodi und/oder verschiedene Auswerteverfahren vorgesehen sein, die einzelne Auswerteergebnisse generieren, die zum Gesamtergebnis verknüpft werden. Dabei wird mit dem Gesamtergebnis generell ein Überwachungsstatus für den gesamten von der Überwachungseinrichtung erfassten Bereich erhalten.

Die erfindungsgemäße Überwachungseinrichtung kann derart erweitert sein, dass an das Grundgerät ein erstes Erweiterungsgerät angeschlossen ist, und dass an das erste Erweiterungsgerät wenigstens ein weiteres Erweiterungsgerät angeschlossen ist, das ein letztes Erweiterungsgerät einer Reihe von Erweiterungsgeräten bildet.

Gemäß einer vorteilhaften Ausführungsform ist das Erweiterungsgerät oder das letzte Erweiterungsgerät an eine Steuereinheit angeschlossen.

Die einzelnen Lichtvorhänge, die das Grundgerät und daran angeschlossene Erweiterungsgeräte ausbilden, bilden generell eine Reihenanordnung von einem Grundgerät bis zum letzten Erweiterungsgerät, welches das Gesamtergebnis generiert und abhängig davon eine Steuereinheit steuert. Die Steuereinheit selbst steuert bevorzugt eine Maschine oder Anlage.

Im einfachsten Fall kann nur ein das Grundgerät bildender Lichtvorhang vorgesehen sein, der das Gesamtergebnis für die Steuereinheit generiert.

Generell kann die Überwachungseinrichtung im Bereich der Sicherheitstechnik eingesetzt werden, insbesondere zur Gefahrenbereichsüberwachung an gefahrbringenden Maschinen und Anlagen. Die Steuereinheit bildet dann eine Sicherheitssteuerung, die einen fehlersicheren Aufbau, insbesondere in Form einer redundanten, mehrkanaligen Rechnerstruktur aufweist.

Zur Erfüllung der sicherheitstechnischen Anforderungen weist die Überwachungseinrichtung wenigstens einen Sicherheitssensor auf. Insbesondere können mehrere oder auch alle der Lichtvorhänge als Sicherheitssensor ausgebildet sein.

Ein derartiger Sicherheitssensor weist insbesondere dadurch einen fehlersicheren Aufbau auf, dass dessen Auswerteeinheit einen redundanten Aufbau aufweist, insbesondere in Form einer mehrkanaligen Rechnerstruktur.

Gemäß einer weiteren Ausgestaltung kann nur ein Teil der Lichtvorhänge als Sicherheitssensor ausgebildet sein. Der oder die weiteren Lichtvorhänge bilden dann messende Lichtvorhänge mit einer einkanaligen Auswerteeinheit. Wird die Überwachungseinrichtung nicht im Bereich der Sicherheitstechnik eingesetzt, können auch alle Lichtvorhänge als messende Lichtvorhänge ausgebildet sein. Gemäß einer vorteilhaften Ausführungsform weist jeder Lichtvorhang eine Anschlusseinheit auf, über welche eine Datenkommunikation zwischen zwei Lichtvorhängen durchführbar ist.

Besonders vorteilhaft weisen die Erweiterungsgeräte zwei Anschlusseinheiten auf.

Damit können Erweiterungsgeräte bildende Lichtvorhänge untereinander angeschlossen werden und das letzte Erweiterungsgerät der Reihe von Lichtvorhängen mit einer Anschlusseinheit an ein vorhergehendes Erweiterungsgerät oder das Grundgerät und mit der zweiten Anschlusseinheit an die Steuereinheit angeschlossen werden. Der das Grundgerät bildende Lichtvorhang benötigt dagegen nur eine Anschlusseinheit.

Besonders vorteilhaft erfolgt die Datenkommunikation über einen Anschluss-Pin der Anschlusseinheiten.

Der Anschluss-Pin ist in der Anschlusseinheit vorteilhaft standardmäßig vorhanden, d.h. es sind keine konstruktiven Erweiterungen erforderlich, um die Datenkommunikation zwischen den Lichtvorhängen zu ermöglichen.

Besonders vorteilhaft ist die Anschlusseinheit ein im Lichtvorhang integrierter Stecker.

Alternativ ist die Anschlusseinheit von offenen Kabelenden gebildet. Dabei ist an den Kabelenden ein Stecker anbringbar.

Damit können im Lichtvorhang standardmäßig vorhandene Anschlussmittel für die Datenkommunikation genutzt werden. Über die Anschluss-Pins der Stecker kann eine sichere, insbesondere gegen EMV-Einflüsse unempfindliche Datenkommunikation bereitgestellt werden.

Besonders vorteilhaft ist die Anschlusseinheit eines Lichtvorhangs für eine Datenkommunikation mit einem weiteren Lichtvorhang konfigurierbar.

Dabei kann die Konfiguration der Anschlusseinheit dadurch erhalten sein, dass die Anschlusseinheit mit einem Anschluss-Pin versehen ist oder Brücken zwischen Anschluss-Pins bestückt sind oder nicht.

Weiterhin kann die Konfiguration der Anschlusseinheit durch eine Software-Einstellung gegeben sein.

Besonders vorteilhaft können alle Lichtvorhänge mit denselben Anschlusseinheiten ausgestaltet sein. Die Konfiguration der Lichtvorhänge als Grundgerät, als mittleres Erweiterungsgerät, das an ein vorhergehendes und an folgendes Erweiterungsgerät anzuschließen ist, und ein letztes Erweiterungsgerät, das an ein vorhergehendes Erweiterungsgerät und an die Steuereinheit anzuschließen ist, kann dann durch eine Software-Konfiguration erfolgen, die in der Fertigung der Lichtvorhänge oder auch am Einsatzort durch den Kunden durchgeführt werden kann. Hierzu können geeignete Schnittstellen bzw. Kommunikationsmittel, wie z. B. PC, Spezialstecker (Dongles), separate Diagnose-Schnittstellen, Bluetooth-Schnittstellen, IO-Link-Kommunikationseinheiten, Ein-/Ausgänge der Lichtvorhänge und dergleichen eingesetzt werden.

Gemäß einer vorteilhaften Ausführungsform weist jeder Lichtvorhang eine Sendereinheit mit einer Reihenanordnung von Lichtstrahlen emittierenden Sendern und eine Empfängereinheit mit einer Reihenanordnung von Lichtstrahlen empfangenden Empfängern auf.

Dann ist zweckmäßig die oder jede Anschlusseinheit an der Empfängereinheit eines Lichtvorhangs vorgesehen.

In der Auswerteeinheit jedes Lichtvorhangs werden von den Empfängern generierte Empfangssignale ausgewertet. Abhängig hiervon werden in den einzelnen Auswerteeinheiten die Auswerteergebnisse ermittelt und über die empfangsseitigen Anschlusseinheiten zu den weiteren Lichtvorhängen weitergegeben.

Vorteilhaft sind an der Sendereinheit eines Lichtvorhangs senderseitige Anschlusseinheiten vorgesehen.

Über die Datenkommunikation der sendeseitigen Anschlusseinheiten kann beispielsweise eine Synchronisierung des Betriebs der einzelnen Lichtvorhänge erfolgen.

Vorteilhaft unterscheidet sich eine Anschlusseinheit einer Empfängereinheit von einer senderseitigen Anschlusseinheit einer Sendereinheit dadurch, dass diese einen Schaltausgang zur Ausgabe eines binären Schaltsignals aufweist.

In diesem Fall weist eine zweite Anschlusseinheit einer Empfängereinheit einen Schalteingang zur Eingabe des binären Schaltsignals auf.

Ist in einem Schutzfeld, das von einem Lichtvorhang überwacht wird, kein Objekt vorhanden, nimmt das Schaltsignal den Schaltzustand "ein" ein, d.h. der Schaltausgang wird eingeschaltet. Ist im Schutzfeld ein Objekt vorhanden, entspricht dies einer Gefahrensituation und das Schaltsignal nimmt den Schaltzustand "aus" ein, d.h. der Schaltausgang ist ausgeschaltet.

Prinzipiell kann die Anordnung der Überwachungseinrichtung mit einem Lichtvorhang als Grundgerät und einem oder mehreren Erweiterungsgeräten bildenden Lichtvorhang eine Reihenschaltung derart bilden, dass dann, wenn nur ein Schaltausgang eines Lichtvorhangs abgeschaltet ist, auch der letzte Lichtvorhang der Reihe ein Schaltsignal "aus" generiert, wodurch eine Sicherheitsfunktion derart generiert wird, dass die nachfolgende Steuereinheit die Maschine oder Anlage abschaltet.

Alternativ kann die erfindungsgemäße Signalanordnung derart ausgebildet sein, dass die einzelnen Lichtvorhänge Auswerteergebnisse generieren, die im letzten Lichtvorhang zur Generierung des Gesamtergebnisses zusammengefasst werden, derart genutzt werden, dass der letzte Lichtvorhang aus dem Gesamtergebnis das Schaltsignal generiert, das an die Steuereinheit ausgegeben wird. Dann kommt es auf die Schaltsignale der vorgeordneten Lichtvorhänge bei der Generierung einer Sicherheitsfunktion für die Steuereinheit nicht mehr an.

Insbesondere bei als Sicherheitssensoren ausgebildeten Lichtvorhängen werden über die Schaltausgänge Testimpulse ausgegeben und zur Testung der Schaltausgänge wieder in die Auswerteeinheit des jeweiligen Lichtvorhangs rückgelesen. Diese Testimpulse können auch zu den angeschlossenen weiteren Lichtvorhängen übertragen werden und so für eine Datenkommunikation genutzt werden. Hierzu werden die Testimpulse in geeigneter Weise modifiziert.

Diese Datenkommunikation funktioniert nur bei eingeschalteten Schaltausgängen und eignet sich daher besonders für die o.g. Ausführungsform, wenn der letzte Lichtvorhang abhängig vom Gesamtergebnis das Schaltsignal für die Steuereinheit generiert. In diesem Fall kommt es auf die Schaltsignale der übrigen Lichtvorhänge nicht an, d.h. deren Schaltausgänge können dauerhaft eingeschaltet sein.

Vorteilhaft ist mit den Datenkommunikationen über Anschluss-Pins der Anschlusseinheiten und über den Schaltausgängen der Anschlusseinheiten eine redundante Datenübertragung realisiert.

Gemäß einer vorteilhaften Ausführungsform erfolgt die Datenkommunikation über die Anschluss-Pins zweier Lichtvorhänge durch einen wechselweisen Austausch von Datentelegrammen.

Dabei ist die Datenkommunikation zwischen zwei Lichtvorhängen durch einen einen Host bildenden Lichtvorhang dadurch initiiert, dass dieser ein Aktivierungskommando an den weiteren, einen Guest bildenden Lichtvorhang meldet.

Der Guest sendet auf das Aktivierungskommando an den Host ein Antwortsignal, wodurch die Datenkommunikation eingeleitet ist.

Die Festlegung der Host-/Guest-Konfiguration erfolgt zweckmäßig während der Konfiguration der Lichtvorhänge als Grundgerät bzw. Erweiterungsgerät.

Gemäß einer ersten Variante tauschen die Lichtvorhänge zeitlich versetzt Datentelegramme aus.

Gemäß einer weiteren Variante senden die Lichtvorhänge gleichzeitig oder zeitlich überlappend Datentelegramme aus.

Insbesondere in diesem Fall werden Datentelegramme über zwei oder mehr Leitungen in Form von Differenzsignalen übertragen.

Gemäß einer Variante zieht der Lichtvorhang sein gesendetes Signal vom empfangenen Signal ab und kann dieses somit eindeutig identifizieren. In dieser Variante können die Datentelegramme gleichzeitig in beide Richtungen übertragen werden und es sind keine zusätzlichen Leitungen erforderlich.

Gemäß einer vorteilhaften Ausgestaltung ist die Datenkommunikation zwischen Lichtvorhängen fehlersicher.

Insbesondere ist die Datenkommunikation durch Prüfsummen abgesichert.

Gemäß einer vorteilhaften Ausgestaltung wird die Datenkommunikation redundant durchgeführt.

Die Redundanz wird dadurch erzielt, dass ein Datentelegramm mehrfach gesendet wird. Empfangsseitig werden per Mehrheitsentscheidung gestörte Bits eliminiert, was die Verfügbarkeit erhöht. Das so korrigierte Datentelegramm wird einer CRC-Prüfung unterzogen, was die Sicherheit erhöht. Dieses Verfahren kann durch eine Fehlererkennung und/oder Fehlerkorrektur erweitert werden, das dann Anforderungen an Sicherheit und Verfügbarkeit erfüllt.

Gemäß einer vorteilhaften Ausführungsform bilden Ergebnisse von mit Lichtvorhängen durchgeführten Schutzfeldüberwachungen Auswerteergebnisse. Dabei kann im einfachsten Fall das Vorhandensein von Objekten abgeprüft werden.

Weiterhin sind innerhalb von Schutzfeldern von Lichtvorhängen Objektverfolgungen über das Schutzfeld des Grundgeräts und die Schutzfelder der Erweiterungsgeräte hinweg durchführbar.

Dabei können insbesondere gefahrbringende Objektbewegungen von nicht gefahrbringenden Objektbewegungen unterschieden werden. Insbesondere können innerhalb von Schutzfeldern Erwartungsbereiche definiert und abgeprüft werden, ob sich ein Objekt innerhalb dieser Erwartungsbereiche bewegt oder nicht.

Abhängig hiervon wird als Gesamtergebnis ein binäres Schaltsignal generiert, dessen Schaltzustände angeben, ob in dem von Lichtvorhängen überwachten Schutzfeldern ein Objekt vorhanden ist oder nicht.

Weiterhin können Auswerteergebnisse von Muting-Informationen und/oder Blanking-Informationen gebildet sein.

Mit einer Muting-Funktion kann eine von Sicherheitssensoren auszulösende Sicherheitsfunktion überbrückt werden. Einzelne Lichtvorhänge, insbesondere messende Lichtvorhänge, können dabei die Funktion von Muting-Sensoren erfüllen, die in vorgegebenen Bereichen zulässige Objekte erfassen. Abhängig hiervon kann eine Muting-Funktion aktiviert werden.

Mit einer Blanking-Funktion werden dauerhaft in einem Schutzfeld vorhandene, nicht sicherheitskritische Objekte ausgeblendet, so dass diese nicht zum Auslösen einer Sicherheitsfunktion führen. Ist beispielsweise ein Pfeiler oder Pfosten in einem Schutzfeld vorhanden, wird der entsprechende Bereich des Schutzfelds geblankt, d.h. ausgeblendet, so dass das Vorhandensein des Pfeilers oder Pfostens im geblankten Bereich nicht zum Auslösen einer Sicherheitsfunktion führt. Umgekehrt wird das Vorhandensein dieses Objekts im geblankten Bereich gefordert, d.h. wenn der Pfeiler oder Pfosten nicht detektiert wird, wird die Sicherheitsfunktion ausgelöst.

Generell kann auch ein Floating-Blanking vorgesehen sein. Dann bewegt sich ein ausgeblendetes nichtsicherheitskritisches Objekt entlang einer definierten Bahnkurve durch ein Schutzfeld.

Gemäß einer weiteren vorteilhaften Ausgestaltung sind für Objekterfassungen mittels Lichtvorhänge Auflösungen und/oder Auswertezeiten vorgebbar.

Je nach Auflösung kann für eine Objektdetektion die Unterbrechung nur eines Lichtstrahls oder mehrerer benachbarter Lichtstrahlen gefordert werden. Mit einer reduzierten Auflösung wird die Detektion kleiner Objekte, wie Staubpartikel, unterdrückt. Die Auswertezeit gibt die Messzeit für Objekterkennungen an. Emittieren die Sender Lichtstrahlen in Form von Lichtsignalen, gibt die Auswertezeit die Integrationszeit, über wieviel Lichtimpulse eine Objekterfassung durchgeführt wird, an.

Vorteilhaft können für unterschiedliche Teilbereiche, die mit Lichtvorhängen überwacht werden, unterschiedliche Auflösungen und/oder Auswertezeiten vorgebbar sein.

Gemäß einer vorteilhaften Ausgestaltung der Synchronisation der Lichtstrahlen sind Auswerteergebnisse von überlappenden Lichtstrahlgeometrien von Lichtvorhängen möglich, ohne dass sich diese überlappenden Lichtstrahlgeometrien stören.

Anhand dieser Informationen wird der Betrieb der einzelnen Lichtvorhänge in geeigneter Weise synchronisiert, damit sich diese bei der Objektdetektion nicht beeinflussen.

Gemäß einer weiteren vorteilhaften Ausgestaltung sind Auswerteergebnisse Anzeigeinformationen, IO-Informationen und/oder Diagnoseinformationen über die Datentelegramme übertragbar.

Die Anzeigeinformationen können Statusmeldungen der einzelnen Lichtvorhänge sein. Ebenso können Anzeigeinformationen als Ausrichthilfe für die Lichtvorhänge dienen, in denen die Ausrichtgüte der einzelnen Lichtvorhänge angezeigt wird.

Als IO (Ein-/Ausgabe) Informationen können Signale externer Einheiten, wie Steuerungen für Fördereinheiten, die zur Generierung von Muting-Funktionen dienen können, vorgesehen sein.

Schließlich können Diagnoseinformationen von Temperatursensoren, Spannungsüberwachungen und dergleichen verwendet werden, beispielsweise um Fehlerzustände zu ermitteln.

Die Erfindung wird im Folgenden anhand der Zeichnungen erläutert. Es zeigen:
- Figur 1:: Ausführungsbeispiel eines Lichtvorhangs.
- Figur 2:: Blockschaltbild der Sendereinheit und Empfängereinheit des Lichtvorhangs gemäß Figur 1.
- Figur 3:: Erstes Ausführungsbeispiel des erfindungsgemäßen Überwachungseinrichtung mit einem Lichtvorhang.
- Figur 4:: Erstes Ausführungsbeispiel des erfindungsgemäßen Überwachungseinrichtung mit zwei Lichtvorhängen.
- Figur 5:: Erstes Ausführungsbeispiel des erfindungsgemäßen Überwachungseinrichtung mit drei Lichtvorhängen.
- Figur 6a, b:: Zeitdiagramme für die Initiierung einer Datenkommunikation zwischen zwei Lichtvorhängen einer Überwachungseinrichtung.
- Figur 7a bis d:: Zeitdiagramme für eine Datenkommunikation zwischen zwei Lichtvorhängen einer Überwachungseinrichtung.
- Figur 8:: Zeitdiagramm zur Absicherung der Datenkommunikation zwischen zwei Lichtvorhängen einer Überwachungseinrichtung.
- Figur 9:: Zeitdiagramm einer Datenübertragung über einen Schaltausgang eines Lichtvorhangs einer Überwachungseinrichtung.
- Figur 10:: Funktionsdiagramm für die Überwachungseinrichtung gemäß Figur 3.
- Figur 11:: Funktionsdiagramm für die Überwachungseinrichtung gemäß Figur 4.
- Figur 12:: Funktionsdiagramm für die Überwachungseinrichtung gemäß Figur 5.

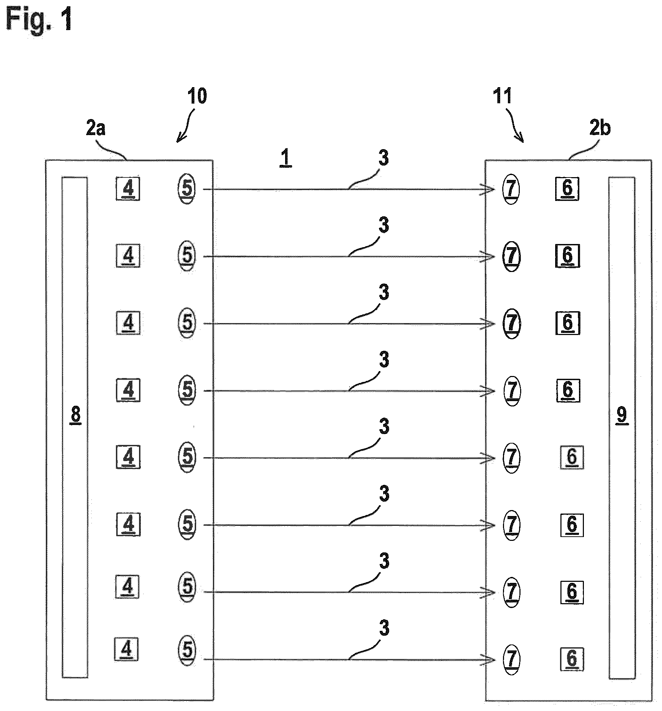

Figur 1 zeigt schematisch den Aufbau eines Lichtvorhangs 1 zur Erfassung von Objekten innerhalb eines Überwachungsbereichs.

Der Lichtvorhang 1 weist eine Sendereinheit 10 mit einem Gehäuse 2a mit einer Reihenanordnung von Lichtstrahlen 3 emittierenden Sendern 4 als erste Sensorkomponenten und diesen zugeordneten Sendeoptiken 5 auf. Weiterhin weist der Lichtvorhang 1 eine Empfängereinheit 11 mit einem zweiten Gehäuse 2b mit einer Reihenanordnung von Lichtstrahlen 3 empfangenden Empfängern 6 als zweite Sensorkomponenten auf, welchen jeweils eine Empfangsoptik 7 vorgeordnet ist.

Die Sender 4 sind von Leuchtdioden gebildet, die Lichtstrahlen 3 im Infrarotbereich emittieren. Die Empfänger 6 sind von Photodioden oder dergleichen gebildet.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen.

Die Sendersteuerung 8 und/oder Auswerteeinheit 9 kann einen mehrkanaligen Aufbau aufweisen, falls der Lichtvorhang 1 einen Sicherheitssensor bildet. Insbesondere kann die Sendersteuerung 8 und/oder Auswerteeinheit 9 aus zwei sich zyklisch überwachenden Rechnereinheiten bestehen.

Alternativ kann der Lichtvorhang 1 ein messender Lichtvorhang 1 sein, wobei dieser einen einkanaligen Aufbau aufweist.

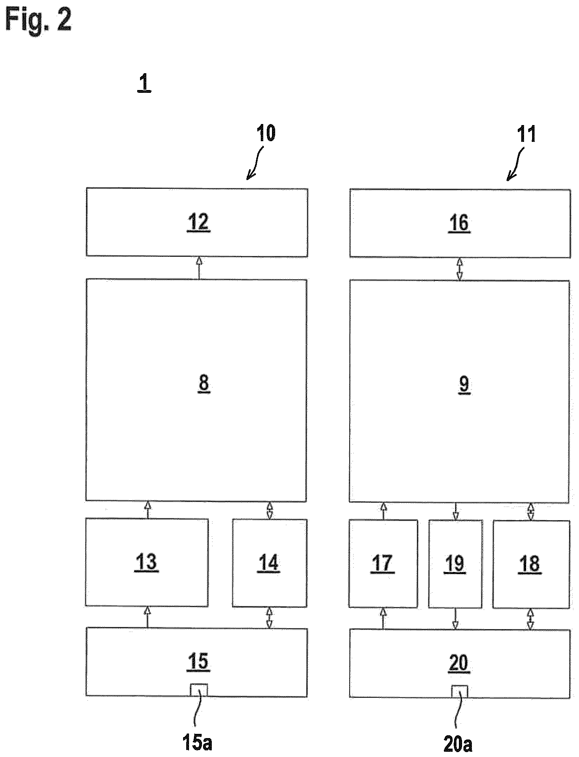

Figur 2 zeigt ein Blockschaltbild des als Sicherheitssensor ausgebildeten Lichtvorhang 1 gemäß Figur 1.

Dabei zeigt Figur 2 die Sendereinheit 10 mit der Senderkaskade 12, d.h. der Reihenanordnung der Sender 4 und die Sendersteuerung 8, die aus einer mehrkanaligen CPU besteht. Die Sendersteuerung 8 wird über ein Netzteil 13 mit Strom versorgt. Das Netzteil 13 und von der Sendesteuerung 8 gesteuerte Ein-/Ausgänge 14 sind auf eine senderseitige Anschlusseinheit 15 in Form eines Gerätesteckers geführt.

Weiterhin zeigt Figur 2 die Empfängereinheit 11 mit der Empfängerkaskade 16, d.h. der Reihenanordnung der Empfänger 6, und der Auswerteeinheit 9, die aus einer mehrkanaligen CPU besteht.

Die Auswerteeinheit 9 wird über ein Netzteil 17 mit Strom versorgt. Das Netzteil 17, Ein-/Ausgänge 18 und ein Schaltausgang 19 sind auf eine Anschlusseinheit 20 in Form eines Gerätesteckers geführt.

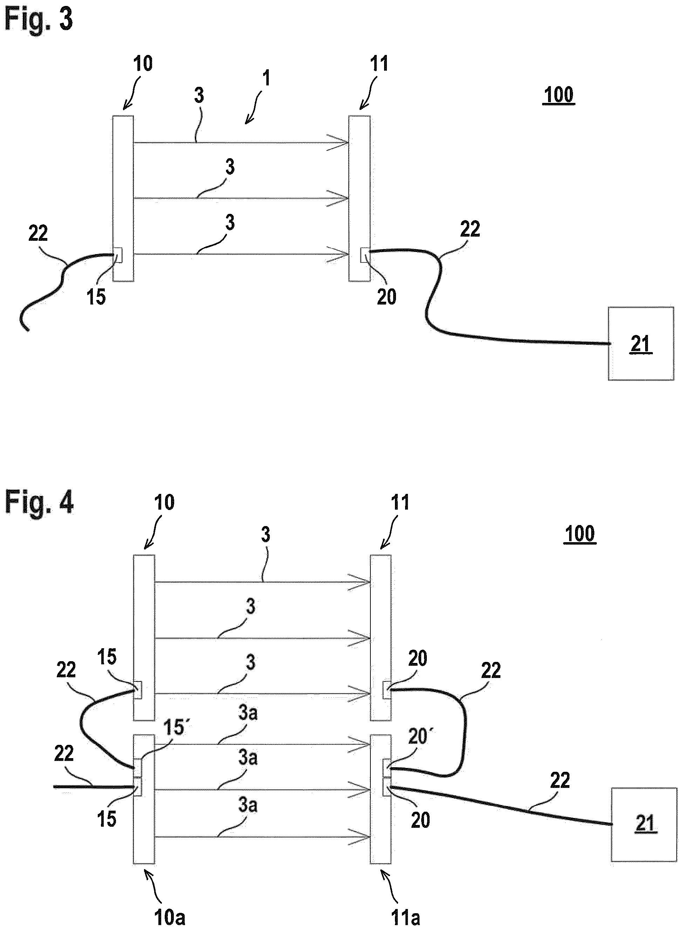

Figur 3 zeigt ein erstes Ausführungsbeispiel der erfindungsgemäßen Überwachungseinrichtung 100. Der als Sicherheitssensor ausgebildete Lichtvorhang 1 gemäß den Figuren 1 und 2 ist mit einer Anschlusseinheit 20 an eine Sicherheitssteuerung 21 angeschlossen, die eine gefahrbringende Anlage oder Maschine steuert. Die Anschlusseinheit 20 ist über ein Kabel 22 mit der Sicherheitssteuerung 21 verbunden.

Der Einfachheit halber sind nur drei Strahlachsen des Lichtvorhangs 1 dargestellt.

In diesem Fall wird der Lichtvorhang 1 in einem Normalbetrieb derart betrieben, dass, abhängig davon, ob mit dem Lichtvorhang 1 in dem von den Lichtstrahlen 3 gebildeten Schutzfeld, d.h. Überwachungsbereich, ein Objekt erkannt wird, ein binäres Schaltsignal generiert wird, dessen Schaltzustände angeben, ob sich ein Objekt im Schutzfeld befindet oder nicht. Bei freiem Schutzfeld ist der Schaltausgang 19 eingeschaltet, wodurch die Sicherheitssteuerung 21 die Anlage oder Maschine in Betrieb setzt. Wird im Schutzfeld ein Objekt erkannt, wird der Schaltausgang 19 abgeschaltet, wodurch die Sicherheitssteuerung 21 die Anlage oder Maschine stillsetzt. Dieses Ausführungsbeispiel kann durch ein Grundgeräte gebildet werden.

Figur 4 zeigt eine Ausbildung der erfindungsgemäßen Überwachungseinrichtung 100 mit dem Lichtvorhang 1 gemäß Figur 3 und einen an diesem Lichtvorhang 1 angeschlossenen weiteren Lichtvorhang 1a. Der Lichtvorhang 1 bildet ein Grundgerät, an welchen der Lichtvorhang 1a als Erweiterungsgerät angeschlossen ist.

Die Empfängereinheit 11a des Erweiterungsgeräts weist hierzu neben der Anschlusseinheit 20 eine korrespondierende Anschlusseinheit 20' auf, in der anstelle eines Schaltausgangs 19 ein Schalteingang und/oder Datenübertragungssignale vorhanden ist. In entsprechender Weise weist die Sendereinheit 10a des Erweiterungsgeräts neben der senderseitigen Anschlusseinheit 15 eine weitere korrespondierende senderseitige Anschlusseinheit 15' auf. Auf diese Weise sind die Sendereinheiten 10, 10a miteinander verbunden. Ebenso sind die Empfängereinheiten 11, 11a miteinander verbunden.

Prinzipiell kann auch das Grundgerät an deren Sendereinheit 10, 10a zwei sendeseitige Anschlusseinheiten 15, 15' aufweisen, von denen die senderseitige Anschlusseinheit 15' durch eine Software-Konfiguration deaktiviert ist. Entsprechend kann die Empfängereinheit 11 des Grundgeräts auch zwei Anschlusseinheiten 20, 20' aufweisen, von denen eine Anschlusseinheit 20' durch eine Software-Konfiguration deaktiviert ist. Dann können das Grundgerät und das Erweiterungsgerät denselben Hardware-Aufbau aufweisen.

Wie Figur 4 zeigt, sind die Lichtvorhänge 1, 1a über Kabel 22 verbunden und daher in ihrer Position zueinander einstellbar. Figur 4 zeigt die Anordnung der Lichtvorhänge 1, 1a in einer Ebene, was jedoch nicht zwingend ist.

Die Anschlusseinheit 20 des Erweiterungsgeräts ist über ein Kabel 22 an die Sicherheitssteuerung 21 angeschlossen.

Erfindungsgemäß werden im Grundgerät Auswerteergebnisse generiert und an das Erweiterungsgerät übertragen. Im Erweiterungsgerät werden ebenfalls Auswerteergebnisse ermittelt und mit dem Auswerteergebnis des Grundgeräts zu einem Gesamtergebnis verknüpft. Die Auswerteergebnisse sind im vorliegenden Fall Ergebnisse von Schutzfeldüberwachungen der Schutzfelder der beiden Lichtvorhänge 1, 1a. Als Gesamtergebnis wird ein binäres Schaltsignal generiert, dessen Schaltzustände angeben, ob sich ein Objekt in den Schutzfeldern der Lichtvorhänge 1, 1a befindet oder nicht. Mit diesem Schaltsignal wird die Sicherheitssteuerung 21 angesteuert.

Der Lichtvorhang 1 generiert somit nicht selbst ein Schaltsignal, sondern übermittelt Auswerteergebnisse an den Lichtvorhang 1a als Erweiterungsgerät, der dann für das Grundgerät und das Erweiterungsgerät ein gemeinsames Schaltsignal generiert.

Die Auswerteergebnisse werden über die Anschlusseinheiten 20, 20' der Empfängereinheiten 11, 11a weitergegeben. Über die senderseitigen Anschlusseinheiten 15, 15' werden Informationen zur Synchronisierung der Sendereinheiten 10, 10a weitergegeben.

Gemäß einer Weiterbildung werden über die Anschlusseinheit 20, 20' Muting- bzw. Blanking-Informationen an das Erweiterungsgerät weitergegeben, wo eine Muting- bzw. Blankingfunktion realisiert werden kann.

Weiterhin können durch die Datenkommunikation zwischen den Lichtvorhängen 1, 1a, 1b Auflösungen oder Auswertezeiten der Lichtvorhänge 1, 1a, 1b definiert werden.

Schließlich können Auswerteergebnisse Anzeigeinformationen, IO-Informationen und/oder Diagnoseinformationen übertragen werden.

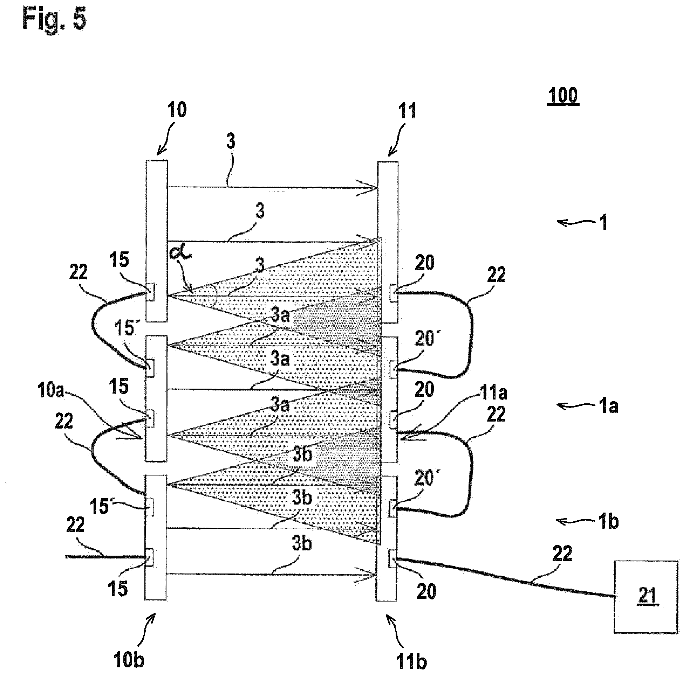

Figur 5 zeigt eine Erweiterung der Überwachungseinrichtung 100 gemäß Figur 4 dahingehend, dass an den das Grundgerät bildenden Lichtvorhang 1 ein Lichtvorhang 1b als erstes mittleres Erweiterungsgerät angeschlossen ist und weiterhin dieser Lichtvorhang 1 an einen zweiten Lichtvorhang 1b als letztes Erweiterungsgerät angeschlossen ist.

Hierzu sind wieder die Sendereinheiten 10, 10a, 10b über senderseitige Anschlusseinheiten 15, 15' verbunden. Entsprechend sind die Empfängereinheiten 11, 11a, 11b über Anschlusseinheiten 20, 20' verbunden.

In diesem Fall werden in den Empfängereinheiten 11, 11a, 11b der Lichtvorhänge 1, 1a, 1b generierte Auswerteergebnisse an die Empfängereinheit 11b des letzten Erweiterungsgeräts übertragen und dort mit Auswerteergebnissen des letzten Erweiterungsgeräts zu einem Gesamtergebnis in Form eines binären Schaltsignals verknüpft, das an die Sicherheitssteuerung 21 ausgegeben wird.

Die weiteren Funktionen der Überwachungseinrichtung 100 gemäß Figur 5 entsprechenden Funktionen der Überwachungseinrichtung 100 gemäß Figur 4. Dies gilt insbesondere auch für die Synchronisierung der Sender 4 der Sendereinheiten 10, 10a, 10b durch Übertragung entsprechender Informationen zwischen diesen Einheiten.

Figur 5 zeigt für einige Strahlachsen der Lichtvorhänge 1, 1a, 1b den Öffnungswinkel *α* der Lichtstrahlen 3, 3a, 3b der Sendereinheiten 10, 10a, 10b. Durch den relativ großen Öffnungswinkel überlappen Lichtstrahlen 3, 3a, 3b benachbarter Sendereinheiten 10, 10a, 10b. Zur Vermeidung gegenseitiger Beeinflussungen erfolgt die Synchronisierung derart, dass die Sender 4 benachbarter Sendereinheiten 10, 10a, 10b, deren Lichtstrahlen 3, 3a, 3b überlappen, nicht gleichzeitig emittiert werden.

Erfindungsgemäß erfolgt die Datenkommunikation zwischen den Lichtvorhängen 1, 1a, 1b, über jeweils einen Anschluss-Pin 20a der Anschlusseinheiten 20, 20' der Empfängereinheiten 11, 11a, 11b bzw. über jeweils einen Anschluss-Pin 15a der senderseitigen Anschlusseinheiten 15, 15' der Sendereinheiten 10, 10a, 10b.

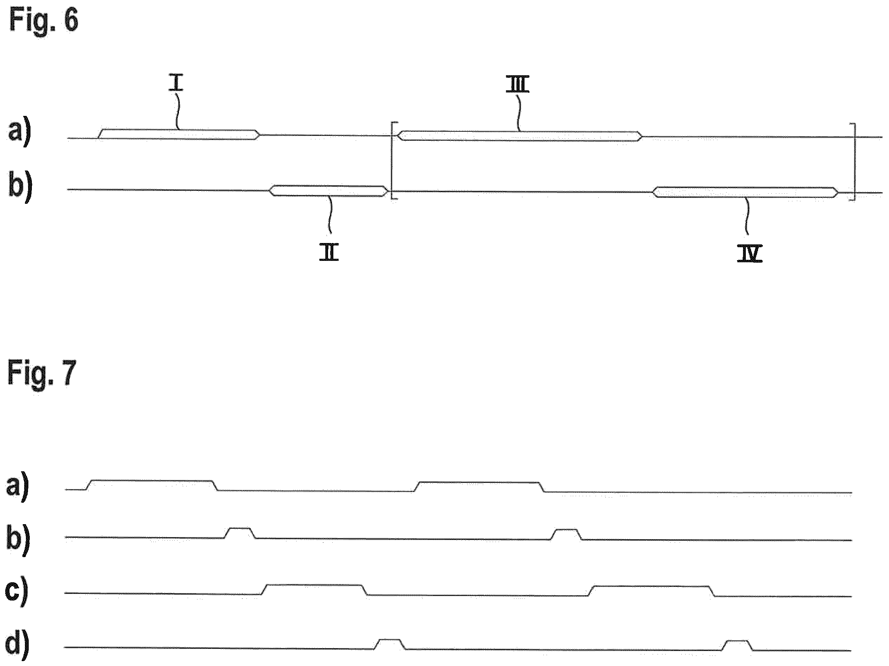

Die Datenkommunikation ist in den Figuren 6 und 7 für die Überwachungseinrichtung 100 gemäß Figur 4 dargestellt. Die Datenkommunikation erfolgt im Millisekunden-Bereich.

Bei der Datenkommunikation der Figuren 6 und 7 fungiert das Grundgerät als Guest und das Erweiterungsgerät als Host.

Wie Figur 6a zeigt, startet die Datenkommunikation derart, dass der Host als Anforderung I ein erstes Datentelegramm an den Guest sendet, dessen Anschluss-Pin 15a zu dieser Zeit noch passiviert ist. Nach Erhalt der Anforderung sendet der Guest eine Antwort II in Form eines Datentelegramms an den Host.

Daraufhin erfolgt eine wechselseitige Kommunikation durch Austausch von Nutzdaten III, IV in Form von Datentelegrammen.

Die Figuren 7a bis 7d veranschaulichen die Datenkommunikation zwischen Host und Guest und deren zeitliche Synchronisation mit dem Lichtempfang im Host und Guest.

Figur 7a zeigt die Zeitintervalle des Lichtempfangs des Hosts. Figur 7b zeigt die Zeitintervalle des Aussendens von Datentelegrammen vom Host zum Guest. Figur 7c zeigt die Zeitintervalle des Lichtempfangs des Guests. Figur 7d zeigt die Zeitintervalle des Aussendens von Datentelegrammen vom Guest zum Host.

Wie die Figuren 7a bis 7d zeigen, erfolgt die Datenkommunikation synchronisiert und jeweils im Anschluss an den Lichtempfang der jeweiligen Einheit. Die Zeitpunkte der Datenübertragungen können als Synchronisationssignal verwendet werden.

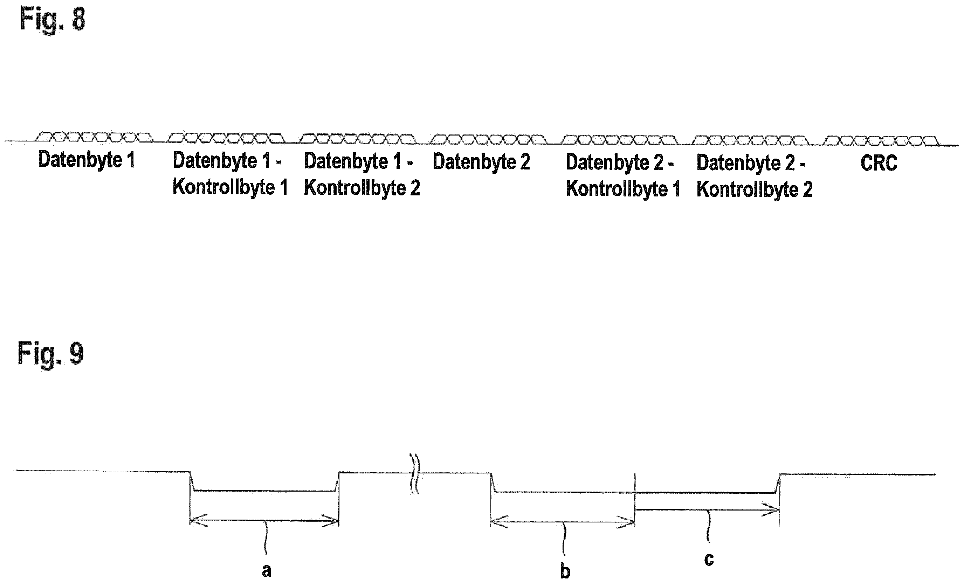

Figur 8 zeigt ein Ausführungsbeispiel einer fehlersicheren Datenübertragung zwischen Host und Guest.

Zunächst sendet der Host (oder Guest) ein Datenbyte 1. Dann wird das Datenbyte 1 nochmals mit einem Kontrollbyte 2 gesendet. Darauf wird das Datenbyte 1 ein drittes Mal mit einem Kontrollbyte 2 gesendet.

Entsprechendes gilt für das darauffolgende Mehrfachsenden eines weiteren Datenbytes 2.

Dadurch, dass jedes Datenbyte dreifach übertragen wird, können durch Mehrheitsentscheid bei der Prüfung der Datenbytes gestörte Bits eliminiert werden. Durch eine anschließende CRC-Prüfung der Kontrollbytes wird die erforderliche Sicherheit der Datenübertragung gewährleistet.

Figur 9 zeigt eine zusätzliche Datenübertragung über die Schaltausgänge 19 der Empfängereinheiten 11, 11a der Überwachungseinrichtung 100. Diese kann dann überall stattfinden, wenn die Schaltausgänge 19 eingeschaltet sind. Über die Schaltausgänge 19 werden Testimpulse zu deren Testung ausgegeben (Zeitintervalle a, b in Figur 9). Durch Verlängerung eines Zeitintervalls (hier b) um das Zeitintervall c kann ebenso ein Datenbit übertragen werden.

Durch die Datenkommunikation über die Schaltausgänge 19 zusätzlich zur Datenkommunikation über die Anschluss-Pins 15a der Anschlusseinheiten 15, 15' wird eine redundante Datenübertragung ermöglicht.

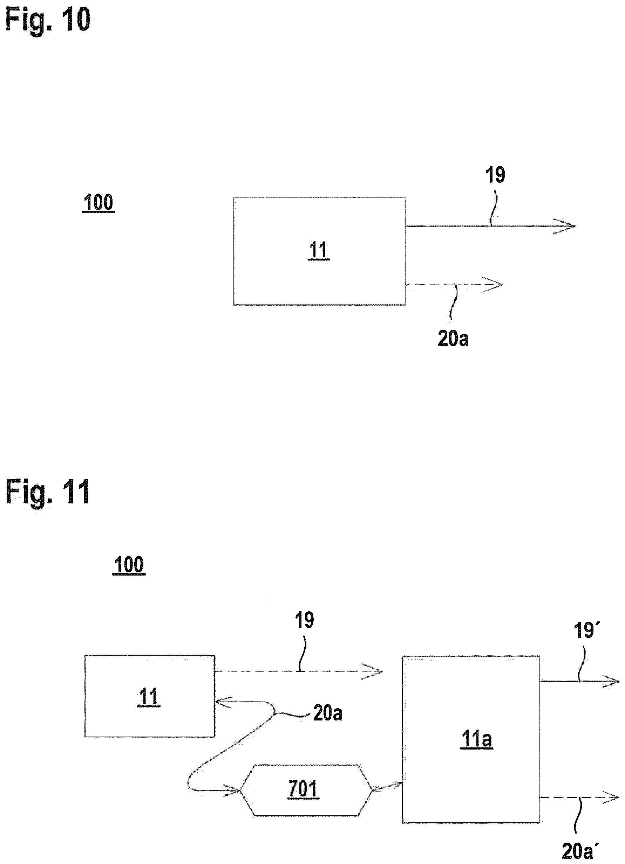

Figur 10 zeigt ein Funktionsdiagramm für die Überwachungseinrichtung 100 gemäß Figur 3. Der Schaltausgang 19 ist an die Sicherheitssteuerung 21 angeschlossen, so dass mit dem über den Schaltausgang 19 ausgegebenen Schaltsignal die Sicherheitssteuerung 21 angesteuert wird. Der Anschluss-Pin oder die Anschluss-Pins 15a der Anschlusseinheit 20a der Empfängereinheit 11 des Lichtvorhangs 1 ist/sind passiv. Der Anschluss an die Anschlusseinheit 20a kann über einen einzelnen Pin oder mehrere Pins erfolgen.

Figur 11 zeigt ein Funktionsdiagramm für die Überwachungseinrichtung 100 gemäß Figur 4. Der Schaltausgang 19 der Empfängereinheit 11 des Grundgeräts ist passiv. Dafür erfolgt über den Anschluss-Pin 20a oder die Anschluss-Pins20a der Empfängereinheit 11 des Grundgeräts mit der Empfängereinheit 11a des Erweiterungsgeräts ein Telegrammaustausch 701. Durch diese Datenkommunikation liegen in der Empfängereinheit 11a des Erweiterungsgeräts die Auswerteergebnisse der Empfängereinheit 11 und der Empfängereinheit 11a vor, so dass dort als Gesamtergebnis ein Schaltsignal generiert wird, das über den Schaltausgang 19' des Erweiterungsgeräts an die Sicherheitssteuerung 21 ausgegeben wird. Der Telegrammaustausch 701 kann auch bidirektional erfolgen. Der Anschluss-Pin oder die Anschluss-Pins 20a' der Empfängereinheit 11a ist/sind passiv.

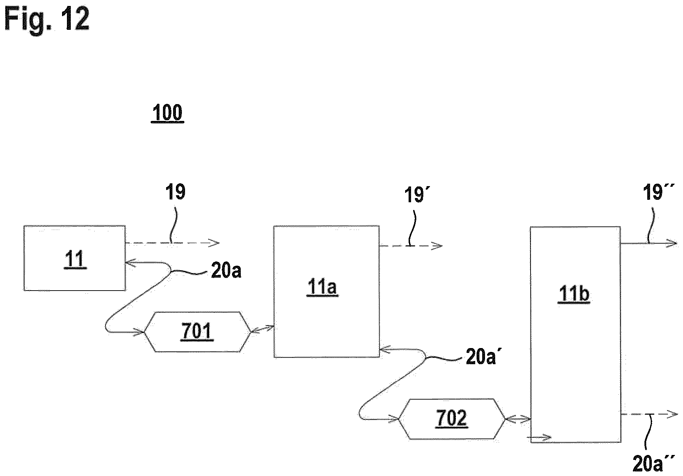

Figur 12 zeigt ein Funktionsdiagramm für die Überwachungseinrichtung 100 gemäß Figur 5. Der Schaltausgang 19 der Empfängereinheit 11 des Grundgeräts sowie der Schaltausgang 19' der Empfängereinheit 11a des mittleren Erweiterungsgeräts sind passiv. Dafür sind deren Anschluss-Pins 20a bzw. 20a' aktiv, so dass zwischen Grundgerät und mittlerem Erweiterungsgerät ein Telegrammaustausch 701 und zwischen dem mittleren Erweiterungsgerät und dem letzten Erweiterungsgerät ein Telegrammaustausch 702 erfolgt. Dadurch liegen im letzten Erweiterungsgerät die Auswerteergebnisse des Grundgeräts, des mittleren Erweiterungsgeräts und des letzten Erweiterungsgeräts vor. Aus dieser Auswerteergebnis generiert die Empfängereinheit 11b des letzten Erweiterungsgeräts ein Schaltsignal, das über den Schaltausgang 19" an die Sicherheitssteuerung 21 ausgegeben wird. Der Anschluss-Pin 20a" der Empfängereinheit 11b ist passiv.

### Bezugszeichenliste

- (1): Lichtvorhang
- (1a): Lichtvorhang
- (1b): Lichtvorhang
- (2a): Gehäuse
- (2b): Gehäuse
- (3): Lichtstrahl
- (3a): Lichtstrahl
- (3b): Lichtstrahl
- (4): Sender
- (5): Sendeoptik
- (6): Empfänger
- (7): Empfangsoptik
- (8): Sendersteuerung
- (9): Auswerteeinheit
- (10): Sendereinheit
- (10a): Sendereinheit
- (10b): Sendereinheit
- (11): Empfängereinheit
- (11a): Empfängereinheit
- (11b): Empfängereinheit
- (12): Senderkaskade
- (13): Netzteil
- (14): Ein-/Ausgang
- (15): Anschlusseinheit
- (15'): Anschlusseinheit
- (15a): Anschluss-Pin
- (16): Empfängerkaskade
- (17): Netzteil
- (18): Ein-/Ausgang
- (19): Schaltausgang
- (19'): Schaltausgang
- (19"): Schaltausgang
- (20): Anschlusseinheit
- (20'): Anschlusseinheit
- (20a): Anschluss-Pin
- (20a'): Anschluss-Pin
- (20a"): Anschluss-Pin
- (21): Sicherheitssteuerung
- (22): Kabel

- (100): Überwachungseinrichtung
- (701): Telegrammaustausch
- (702): Telegrammaustausch

## Patentansprüche

1. Überwachungseinrichtung (100) mit einem Lichtvorhang (1) zur Erfassung von Objekten in einem Überwachungsbereich, **dadurch gekennzeichnet, dass** an dem Lichtvorhang (1) als Grundgerät wenigstens ein weiterer Lichtvorhang (1a) als Erweiterungsgerät angeschlossen ist, wobei Auswerteergebnisse des Grundgeräts an das Erweiterungsgerät übertragen und mit Auswerteergebnissen des Erweiterungsgeräts verknüpft werden, wodurch in dem Erweiterungsgerät ein Gesamtergebnis erhalten wird, dass jeder Lichtvorhang (1, 1a, 1b) eine Anschlusseinheit (20, 20') aufweist, über welche eine Datenkommunikation zwischen zwei Lichtvorhängen (1, 1a, 1b) durchführbar ist, wobei die Datenkommunikation zwischen Lichtvorhängen (1, 1a, 1b) fehlersicher ist, wobei die Datenkommunikation durch Prüfsummen abgesichert ist.

2. Überwachungseinrichtung (100) nach Anspruch 1, **dadurch gekennzeichnet, dass** an das Grundgerät ein erstes Erweiterungsgerät angeschlossen ist, und dass an das erste Erweiterungsgerät wenigstens ein weiteres Erweiterungsgerät angeschlossen ist, das ein letztes Erweiterungsgerät einer Reihe von Erweiterungsgeräten bildet, wobei das Erweiterungsgerät oder das letzte Erweiterungsgerät an eine Steuereinheit angeschlossen ist.

3. Überwachungseinrichtung (100) nach einem der Ansprüche 1 oder 2, **dadurch gekennzeichnet, dass** jeder Lichtvorhang (1, 1a, 1b) zwei Anschlusseinheiten (15, 15', 20, 20') aufweist, wobei eine Anschlusseinheit (15, 15', 20, 20') des Lichtvorhangs (1, 1a, 1b) zum Anschluss an die Steuereinheit ausgebildet sein kann.

4. Überwachungseinrichtung (100) nach einem der Ansprüche 1 bis 3, **dadurch gekennzeichnet, dass** die Anschlusseinheit (15, 15', 20, 20') eines Lichtvorhangs (1, 1a, 1b) für eine Datenkommunikation mit einem weiteren Lichtvorhang (1, 1a, 1b) konfigurierbar ist.

5. Lichtvorhang (1) nach Anspruch 4, **dadurch gekennzeichnet, dass** die Konfiguration der Anschlusseinheit (15, 15', 20, 20') dadurch erhalten ist, dass die Anschlusseinheit (15, 15', 20, 20') mit einem Anschluss-Pin (15a, 20a, 20a', 20a") bestückt ist oder nicht, und/oder dass die Konfiguration der Anschlusseinheit (15, 15', 20, 20') durch eine Software-Einstellung gegeben ist.

6. Lichtvorhang (1) nach einem der Ansprüche 1 bis 5, **dadurch gekennzeichnet, dass** die Anschlusseinheit (15, 15', 20, 20') ein im Lichtvorhang (1, 1a, 1b) integrierter Stecker ist, oder dass die Anschlusseinheit (15, 15', 20, 20') von offenen Kabelenden gebildet ist, wobei an den Kabelenden ein Stecker anbringbar ist.

7. Überwachungseinrichtung (100) nach einem der Ansprüche 1 bis 6, **dadurch gekennzeichnet, dass** jeder Lichtvorhang (1, 1a, 1b) eine Sendereinheit (10, 10a, 10b) mit einer Reihenanordnung von Lichtstrahlen (3, 3a, 3b) emittierenden Sendern (4) und eine Empfängereinheit (11, 11a, 11b) mit einer Reihenanordnung von Lichtstrahlen (3, 3a, 3b) empfangenden Empfängern (6) aufweist, dass die oder jede Anschlusseinheit (15, 15', 20, 20') an der Empfängereinheit (11, 11a, 11b) eines Lichtvorhangs (1, 1a, 1b) vorgesehen ist, oder dass an der Sendereinheit (10, 10a, 10b) eines Lichtvorhangs (1, 1a, 1b) senderseitige Anschlusseinheiten (15, 15') vorgesehen sind, wobei sich eine Anschlusseinheit (15, 15', 20, 20') einer Empfängereinheit (11, 11a, 11b) von einer senderseitigen Anschlusseinheit (15, 15') einer Sendereinheit (10, 10a, 10b) dadurch unterscheidet, dass diese einen Schaltausgang (19, 19', 19") zur Ausgabe eines binären Schaltsignals aufweist, und wobei eine zweite Anschlusseinheit (20') einer Empfängereinheit (11, 11a, 11b) einen Schalteingang zur Eingabe des binären Schaltsignals aufweist.

8. Überwachungseinrichtung (100) nach einem der Ansprüche 4 bis 18, **dadurch gekennzeichnet**, die Datenkommunikation über einen Anschluss-Pin oder Anschluss-Pins (15a, 20a) der Anschlusseinheit (15, 15', 20, 20') erfolgt, und dass die Datenkommunikation über die Anschluss-Pins (15a, 20a, 20a', 20a") zweier Lichtvorhänge (1a, 1b) durch einen wechselweisen Austausch von Datentelegrammen erfolgt.

9. Überwachungseinrichtung (100) nach Anspruch 8, **dadurch gekennzeichnet, dass** die Datenkommunikation zwischen zwei Lichtvorhängen (1, 1a, 1b) durch einen Host bildenden Lichtvorhang (1, 1a, 1b) dadurch initiiert ist, dass dieser ein Aktivierungskommando an den weiteren, einen Guest bildenden Lichtvorhang (1, 1a, 1b) meldet, wobei der Guest auf das Aktivierungskommando an den Host ein Antwortsignal sendet, wodurch die Datenkommunikation eingeleitet ist.

10. Überwachungseinrichtung (100) nach einem der Ansprüche 8 oder 9, **dadurch gekennzeichnet, dass** die Lichtvorhänge (1, 1a, 1b) zeitlich versetzt Datentelegramme austauschen, und/oder dass die Lichtvorhänge (1, 1a, 1b) gleichzeitig oder zeitlich überlappend Datentelegramme aussenden, und/oder dass Datentelegramme über zwei oder mehr Leitungen in Form von Differenzsignalen übertragen werden.

11. Überwachungseinrichtung (100) nach einem der Ansprüche 1 bis 10, **dadurch gekennzeichnet, dass** die Datenkommunikation redundant durchgeführt wird, dass über Schaltausgänge (19) der Anschlusseinheit (20) der Empfängereinheit (11, 11a, 11b) Testimpulse ausgebbar sind, welche für eine Datenkommunikation und/oder Synchronisation der Datenkommunikation nutzbar sind, wobei für eine Datenkommunikation die Testimpulse modifizierbar sind.

12. Überwachungseinrichtung (100) nach einem der Ansprüche 1 bis 11, **dadurch gekennzeichnet, dass** wenigstens ein Lichtvorhang (1) einen Sicherheitssensor ausbildet, und/oder dass wenigstens ein Lichtvorhang (1) einen messenden Lichtvorhang (1) ausbildet.

13. Überwachungseinrichtung (100) nach einem der Ansprüche 1 bis 12, **dadurch gekennzeichnet, dass** Ergebnisse von mit Lichtvorhängen (1, 1a, 1b) durchgeführten Schutzfeldüberwachungen Auswerteergebnisse bilden.

14. Überwachungseinrichtung (100) nach Anspruch 13, **dadurch gekennzeichnet, dass** innerhalb von Schutzfeldern von Lichtvorhängen (1, 1a, 1b) Objektverfolgungen durchführbar sind, und/oder dass als Gesamtergebnis ein binäres Schaltsignal generiert wird, dessen Schaltzustände angeben, ob in den von Lichtvorhängen (1, 1a, 1b) überwachten Schutzfeldern ein Objekt vorhanden ist oder nicht.

15. Überwachungseinrichtung (100) einem der Ansprüche 1 bis 14, **dadurch gekennzeichnet, dass** Auswerteergebnisse Anzeigeinformationen von Muting-Informationen und/oder Blanking-Informationen gebildet sind, dass Auswerteergebnisse von überlappenden Lichtstrahlgeometrien von Lichtvorhängen (1, 1a, 1b) gebildet sind. und/oder. dass Auswerteergebnisse Anzeigeinformationen, IO-Informationen und/oder Diagnoseinformationen sind.
